# EUROPÄISCHE PATENTSCHRIFT

(11) **EP 1 191 262 B1**
(45) Veröffentlichungstag und Bekanntmachung des Hinweises auf die Patenterteilung: **23.07.2003**
(21) Anmeldenummer: 01890249.4
(22) Anmeldetag: 30.08.2001
(51) Int. Cl.: F16J 15/02, F16J 15/10

(54) **Dichtungseinrichtung**
Sealing device
Dispositif d'étanchéité

(30) Priorität: 06.09.2000 AT 15202000
(43) Veröffentlichungstag der Anmeldung: 27.03.2002
(73) Patentinhaber: DFT Maschinenbau GmbH, 4550 Kremsmünster (AT)
(72) Erfinder: Prenninger, Jürgen, Ing., 4591 Molln (AT)
(74) Vertreter: Babeluk, Michael, Dipl.-Ing. Mag.

(56) Entgegenhaltungen:
- EP-A- 0 094 772
- EP-A- 0 402 909
- DE-A- 19 830 326
- DE-A- 19 848 552
- GB-A- 1 244 397
- US-A- 5 482 297
- US-A- 5 992 595
- PATENT ABSTRACTS OF JAPAN vol. 1999, no. 09, 30. Juli 1999 (1999-07-30) & JP 11 108187 A (HONDA MOTOR CO LTD), 20. April 1999 (1999-04-20)
- PATENT ABSTRACTS OF JAPAN vol. 2000, no. 03, 30. März 2000 (2000-03-30) & JP 11 336909 A (MITSUBISHI CABLE IND LTD), 7. Dezember 1999 (1999-12-07)

## Beschreibung

Die Erfindung betrifft eine Dichtungseinrichtung zur Abdichtung von zwei Teilen mit im Wesentlichen ebenen Flächen, wobei zumindest ein Teil eine Dichtungsnut zur Aufnahme einer elastischen Dichtung aufweist, wobei die Dichtungsnut einen Nutquerschnitt aufweist, welcher größer ist als der innerhalb der Dichtungsnut liegende Querschnitt der in die Dichtungsnut eingesetzten Dichtung in unbelastetem Zustand.

Dichtungseinrichtungen der eingangs genannten Art sind bekannt. Neben der allgemeinen Forderung, dass die Dichtung möglichst unempfindlich gegen das Dichtmedium sein muss und eine sichere und dauerhafte Abdichtung zwischen den Teilen bewirkt, ergibt sich die Forderung einer einfachen Herstellung. In vielen Anwendungsfällen ergibt sich die zusätzliche Zielsetzung, dass die Dichtflächen der abzudichtenden Teile möglichst geringen Abstand zueinander aufweisen oder sogar in direktem Körperkontakt zueinander stehen. Zudem sollten Dichtungen auch mit kompliziert geformtem geometrischen Grundriss auf möglichst einfache Weise herzustellen sein.

Es ist bekannt, formelastische Dichtungen, beispielsweise aus Polyurethan, durch Wasserstrahlschneiden in die gewünschte Form zu bringen. Derartige Dichtungen werden üblicherweise in eine im Querschnitt an die Dichtung angepasste Dichtungsnut eines der beiden abzudichtenden Teile gelegt, wobei die Dichtung bezüglich der ebenen Fläche des Teiles vorspringend ausgebildet ist. Die Abdichtung erfolgt durch Anpressen des zweiten Teiles an die Dichtung, wobei die Flächen der abzudichtenden Teile voneinander geringfügig beabstandet sind. Durch die Inkompressibilität des Dichtungsmateriales der die Nut ausfüllenden Dichtung ist zur Gewährleistung einer guten Abdichtung ein Mindestspalt unvermeidlich. In vielen Fällen ist aber ein direkter Kontakt der beiden abzudichtenden Flächen erwünscht..

Aus der US 5,722,667 A ist eine Dichtungseinrichtung zur Abdichtung von zwei im Wesentlichen ebenen Flächen bekannt, wobei die Dichtung in Nuten der Teile angeordnet ist. Die Dichtung selbst besteht aus O-Ringen, welche von einem steiferen Material umhüllt sind. Die Dichtungshülle wird durch die flexiblen O-Ringe an die Nutflanken gedrückt, wodurch eine sichere Abdichtung entsteht. Durch den komplizierten Aufbau der Dichtung ist die Herstellung allerdings relativ aufwendig. Diese Dichtung eignet sich insbesondere nicht für Dichtflächen mit kompliziertem Grundriss. Diese Dichtung kann nur als Dichtschnur verwendet werden. Eine oder mehrere geschlossene Konturen an einer Dichtung können nicht realisiert werden. Auch kann diese Dichtung nicht in seiner Breite variieren.

Die Veröffentlichungen US 4,776,600 A und US 5,482,297 A offenbaren Dichtungseinrichtungen zu Abdichtung von zwei Teilen, der eingangs genannten Art.

Insbesondere bei komplizierteren geometrischen Grundrissen können derartige Dichtelemente allerdings sehr leicht unbeabsichtigt bei Montage- und Demontagearbeiten aus der Nut herausfallen oder sich aus der vorbestimmten Lage verschieben, so dass eine sichere Abdichtung nicht mehr gewährleistet ist.

Aus der EP 0 094 772 A2 geht eine Dichtung für eine Elektrolytzelle hervor, welche Vorsprünge bzw. Vertiefungen aufweist, die in korrespondierende Vertiefungen bzw. Vorsprünge der Elektrolytoberfläche eingreifen. Die Vorsprünge bzw. Vertiefungen sind im Bereich der abzudichtenden Fläche angeordnet. Im Bereich der Vorsprünge bzw. Vertiefungen weist die Dichtung einen von einem Rechteckquerschnitt abweichenden Querschnitt auf. Die Formgebung der Vorsprünge und Vertiefungen ist relativ kompliziert.

Aufgabe der Erfindung ist es diese Nachteile zu vermeiden und auf möglichst einfache Weise eine sichere Abdichtung von zwei Teilen zu erreichen. Insbesondere soll ein versehentliches Verschieben oder Herausfallen der Dichtung vermieden werden.

Erfindungsgemäß wird dies dadurch erreicht, dass die Dichtung seitliche durch Materialvorsprünge gebildete Haltekrallen aufweist, dass die Dichtung eine im Wesentlichen rechteckige Querschnittsfläche aufweist und dass die vorzugsweise als Formdichtung ausgebildete Dichtung durch Wasserstrahlschneiden geformt ist. Durch die Haltekrallen wird ein versehentliches Herausfallen oder Verschieben der Dichtung bei der Montage und Demontage zuverlässig verhindert. Die Dichtung kann im Prinzip jeden möglichen geometrischen Grundriss aufweisen. Dadurch, dass die Dichtung durch Wasserstrahlschneiden geformt ist, wird eine einfache und kostengünstige Formgebung möglich.

Elastische Dichtungen, die beispielsweise aus Polyurethan bestehen, sind im Wesentlichen inkompressibel. Dies bedeutet, dass bei Druckbelastung nur eine Formänderung, aber praktisch keine Votumsänderung auftritt. Dadurch, dass der Nutquerschnitt größer ausgeführt ist als die Querschnittsfläche des in unbelastetem Zustand innerhalb der Dichtungsnut liegenden Teiles der Dichtung wird erreicht, dass bei Belastung das Material der Dichtung die vorher unausgefüllten Bereiche der Dichtungsnut ausfüllen kann und die Dichtung somit bei Belastung zur Gänze von der Dichtungsnut aufgenommen wird. Dies ist möglich, wenn der Nutquerschnitt der Dichtungsnut mindestens der Querschnittsfläche der Dichtung entspricht. Um den Fertigungsaufwand möglichst gering zu halten, ist die Dichtungsnut nur in einen Teil eingeformt. Alternativ dazu kann aber vorgesehen sein, dass jeder Teil eine Dichtungsnut zur Aufnahme der Dichtung aufweist, wobei die Summe der Nutquerschnitte der Dichtungsnuten größer ist als die Querschnittsfläche der Dichtung und die Summe der Nut-Tiefen kleiner der Dichtungshöhe ist.

In einer besonders bevorzugten Ausführungsvariante der Erfindung ist vorgesehen, dass die Dichtungsnut als Schwalbenschwanznut ausgebildet ist. Die Schwalbenschwanznut ermöglicht einerseits einen guten Sitz der vorzugsweise eine rechteckige Querschnittsfläche aufweisenden Dichtungsnut und stellt andererseits genügend Freiraum für die bei Belastung auswandernden Teile des Dichtungsmateriales bereit. Dabei kann vorgesehen sein, dass die Schwalbenschwanznut einen Öffnungswinkel zwischen zwei gegenüberliegenden Nutflanken von etwa 15° bis 45°, vorzugsweise etwa 30° aufweist.

Um eine sichere Abdichtung zu garantieren ist es vorteilhaft, wenn die Tiefe der Dichtungsnut kleiner ist als die Höhe der Dichtung.

Die Dichtung ist im Bereich des Kragens der Schwalbenschwanznut lose geführt, um die Montage und Demontage zu erleichtern. Um ein versehentliches Herausfallen der Dichtung bei der Montage und Demontage der Teile zu vermeiden ist es besonders vorteilhaft, wenn die Dichtung seitliche durch Materialvorsprünge gebildete Haltekrallen aufweist.

Die Erfindung wird im folgenden anhand der Figuren näher erläutert. Es zeigen
- Fig. 1: eine erfiridungsgemäße Dichtungseinrichtung in unbelastetem Zustand in einem Querschnitt,
- Fig. 2: die Dichtungseinrichtung in belastetem Zustand und
- Fig. 3: einen Grundriss einer Dichtung der erfindungsgemäßen Dichtungseinrichtung.

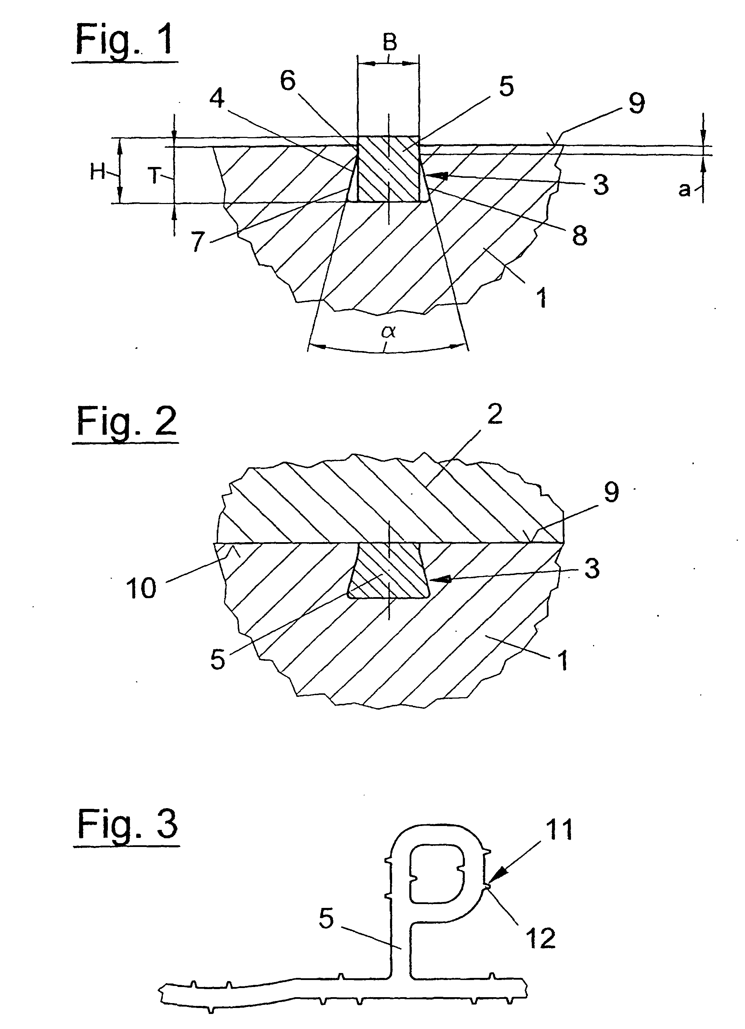

Fig. 1 zeigt einen Teil 1 von zwei abzudichtenden Teilen 1, 2 mit einer eingeformten Dichtungsnut 3, welche als Schwalbenschwanznut 4 ausgebildet ist. In die Dichtungsnut 3 ist eine aus Polyurethan bestehende Dichtung 5 mit rechteckigem Querschnitt eingelegt. Die Dichtung 5 weist in unbelastetem Zustand eine Breite B auf, die maximal der Breite des Kragens 6 der Schwalbenschwanznut 4 entspricht. Die Höhe H der Dichtung 5 ist geringfügig größer als die Tiefe T der Dichtungsnut 3.

Die seitlichen Nutflanken 7, 8 der Schwalbenschwanznut 4 weisen einen Öffnungswinkel α auf, welcher zwischen 15° und 45°, vorzugsweise bei etwa 30°, liegt. Der Kragen 6 kann über einen Bereich a abgeflacht sein, um das Einschieben der Dichtung 5 zu erleichtern sowie um eine Beschädigung der Dichtung 5 durch scharfe Kanten zu vermeiden. In dem in Fig. 1 dargestellten unbelastetem Zustand füllt die Dichtung 5 nur einen Teil der Schwalbenschwanznut 4 aus und steht geringfügig über die ebene Fläche 9 des Teiles 1 hervor.

Fig. 2 zeigt die zusammengesetzten Teile 1 und 2, welche durch die Dichtung 5 gegeneinander abgedichtet sind. Die ebene Fläche 10 des zweiten Teiles 2 liegt auf der ebenen Fläche 9 des ersten Teiles 1 auf. Dadurch wird die Dichtung 5 in die Dichtungsnut 3 gepresst, so dass das Material der Dichtung 5 die Schwalbenschwanznut 4 ausfüllt. Durch diese elastische Verformung der Dichtung 5 liegt diese kraftschlüssig am Teil 2 auf und bewirkt eine sichere Abdichtung beider Teile 1 und 2.

Um eine einfache Montage und Demontage zu ermöglichen ist die Dichtung 5 lose über den Kragen 6 der Dichtungsnut 3 in die Schwalbenschwanznut 4 eingesetzt. Ein Herausfallen der Dichtung 5 aus der Dichtungsnut 3 kann vermieden werden, wenn die Dichtung 5 - im Grundriss betrachtet - durch seitliche Vorsprünge 11 gebildete Haltekrallen 12 aufweist, welche am Kragen 6 der Dichtungsnut 3 aufliegen und die Dichtung 5 seitlich leicht verspannen. Die seitlichen Haltekrallen 12 sind aus Fig. 3 ersichtlich. Die Dichtung 5 kann mit jedem beliebigen Grundriss ausgeführt sein. Die Formgebung des Grundrisses erfolgt zweckmäßiger Weise durch eine Wasserstrahlschneidemaschine, wobei ein besonders gutes Schnittergebnis erzielt werden kann, wenn das Rohmaterial der Dichtung 5, beispielsweise Polyurethan-Platten, vor dem Schneiden auf eine dünne Kunststoffplatte geklebt wird.

## Patentansprüche

1. Dichtungseinrichtung zur Abdichtung von zwei Teilen (1, 2) mit im Wesentlichen ebenen Flächen, wobei zumindest ein Teil eine Dichtungsnut (3) zur Aufnahme einer elastischen Dichtung (5) aufweist, wobei die Dichtungsnut (3) einen Nutquerschnitt aufweist, welcher größer ist als der innerhalb der Dichtungsnut (3) liegende Querschnitt der in die Dichtungsnut (3) eingesetzten Dichtung (5) in unbelastetem Zustand, **dadurch gekennzeichnet, dass** die Dichtung (5) seitliche durch Materialvorsprünge gebildete Haltekrallen (12) aufweist, dass die Dichtung (5) eine im Wesentlichen rechteckige Querschnittsfläche aufweist und dass die vorzugsweise als Formdichtung ausgebildete Dichtung (5) durch Wasserstrahlschneiden geformt ist.

2. Dichtungseinrichtung nach Anspruch 1, **dadurch gekennzeichnet, dass** der Nutquerschnitt der Dichtungsnut (3) mindestens der Querschnittsfläche der Dichtung (5) entspricht.

3. Dichtungseinrichtung nach Anspruch 1, **dadurch gekennzeichnet, dass** jeder Teil (1, 2) eine Dichtungsnut (3) zur Aufnahme der Dichtung (5) aufweist, wobei die Summe der Nutquerschnitte der Dichtungsnuten (3) größer ist als die Querschnittsfläche der Dichtung (5).

4. Dichtungseinrichtung nach einem der Ansprüche 1 bis 3, **dadurch gekennzeichnet, dass** die Dichtungsnut (3) als Schwalbenschwanznut (4) ausgebildet ist.

5. Dichtungseinrichtung nach Anspruch 4, **dadurch gekennzeichnet, dass** die Schwalbenschwanznut (4) einen Öffnungswinkel (α) zwischen zwei gegenüberliegenden Nutflanken (7, 8) von etwa 15° bis 45°, vorzugsweise etwa 30° aufweist.

6. Dichtungseinrichtung nach einem der Ansprüche 1 bis 5, **dadurch gekennzeichnet, dass** die Tiefe (T) der Dichtungsnut (3) kleiner ist als die Höhe (H) der Dichtung (5).

7. Dichtungseinrichtung nach einem der Ansprüche 1 bis 6, **dadurch gekennzeichnet, dass** die Dichtung (5) aus Polyurethan besteht.

## Claims

1. A sealing device for sealing two parts (1, 2) with substantially plane surfaces, with at least one part comprising a sealing groove (3) for receiving an elastic seal (5), with the sealing groove (3) having a groove cross section which is larger than the cross section situated within the sealing groove (3) of the seal (5) inserted into the sealing groove (3) in the unloaded state, **characterized in that** the seal (5) comprises lateral holding claws (12) which are formed by projections in the material, that the seal (5) comprises a substantially rectangular cross-sectional surface and that the seal (5) which is preferably configured as a shaped seal is shaped by jet cutting.

2. A sealing device as claimed in claim 1, **characterized in that** the groove cross section of the sealing groove (3) corresponds at least to the cross-sectional surface of the seal (5).

3. A sealing device as claimed in claim 1, **characterized in that** each part (1, 2) comprises a sealing groove (3) for receiving the seal (5), with the sum total of the groove cross sections of the sealing grooves (3) being larger than the cross-sectional surface of the seal (5).

4. A sealing device as claimed in one of the claims 1 to 3, **characterized in that** the sealing groove (3) is arranged as a dovetail groove (4).

5. A sealing device as claimed in claim 4, **characterized in that** the dovetail groove (4) comprises an aperture angle (α) between two mutually opposite groove flanks (7, 8) of approximately 15° to 45°, preferably approximately 30°.

6. A sealing device as claimed in one of the claims 1 to 5, **characterized in that** the depth (T) of the sealing groove (3) is smaller than the height (H) of the seal (5).

7. A sealing device as claimed in one of the claims 1 to 6, **characterized in that** the seal (5) consists of polyurethane.

## Revendications

1. Installation d'étanchéité pour assurer l'étanchéité de deux pièces (1, 2) ayant des surfaces essentiellement planes, dont au moins une pièce est munie d'une rainure d'étanchéité (3) pour recevoir un joint élastique (5), la rainure d'étanchéité (3) ayant une section supérieure à la section se trouvant à l'intérieur de la rainure (3) du joint (5) placé à l'état non sollicité dans la rainure d'étanchéité (3),
**caractérisée en ce que**
le joint (5) comporte des griffes de fixation (12) formées latéralement par des saillies de matière, le joint (5) a une section de surface essentiellement rectangulaire, et le joint (5) réalisé de préférence comme joint moulé est mis en forme par découpe au jet d'eau.

2. Installation de joint selon la revendication 1,
**caractérisée en ce que**
la section du joint d'étanchéité (3) correspond au moins à la section du joint (5).

3. Installation d'étanchéité selon la revendication 1,
**caractérisée en ce que**
chaque pièce (1, 2) comporte une rainure d'étanchéité (3) pour recevoir le joint (5), la somme des sections des rainures d'étanchéité (3) étant supérieure à la surface de la section du joint (5).

4. Installation d'étanchéité selon l'une quelconque des revendications 1 à 3,
**caractérisée en ce que**
la rainure d'étanchéité (3) est en forme de rainure en queue d'aronde (4).

5. Installation selon la revendication 4,
**caractérisée en ce que**
la rainure en queue d'aronde (4) a entre deux flancs de rainure opposés (7, 8) un angle d'ouverture (α) d'environ 15°à 45°, et de préférence environ 30°.

6. Joint d'étanchéité selon l'une quelconque des revendications 1 à 5,
**caractérisé en ce que**
la profondeur (T) de la rainure d'étanchéité (3) est inférieure à la hauteur (H) du joint (5).

7. Joint d'étanchéité selon l'une quelconque des revendications 1 à 6,
**caractérisé en ce que**
le joint (5) est en polyuréthane.
